# EUROPEAN PATENT APPLICATION

(11) **EP 4 270 845 A1**
(43) Date of publication of application: **01.11.2023**
(21) Application number: 23169475.3
(22) Date of filing: 24.04.2023
(51) Int. Cl.: H04L 5/00, H04W 72/23

(54) **METHOD AND APPARATUS FOR TRANSMITTING AND RECEIVING SIGNAL IN WIRELESS COMMUNICATION SYSTEM**

(30) Priority: 28.04.2022 KR 20220053062
(71) Applicant: LG ELECTRONICS, INC., Seoul 07336 (KR)
(72) Inventor: BAE, Duckhyun, 06772 Seoul (KR); KIM, Jaehyung, 06772 Seoul (KR); HWANG, Seunggye, 06772 Seoul (KR)
(74) Representative: Frenkel, Matthias Alexander

(57) **Abstract**

The present disclosure provides a method and apparatus for transmitting and receiving a signal in a wireless communication system. When a user equipment (UE) is configured with M resources within one periodicity based on a semi-persistent scheduling (SPS) configuration, a base station may configure N resources actually available to the UE in downlink control information (DCI). The UE may select some of the N resources to receive data. Accordingly, resources may be flexibly allocated to a plurality of UEs without delay due to data jitter.

## Description

### BACKGROUND

### Technical Field

The present disclosure relates to a method and apparatus for use in a wireless communication system.

### Discussion of the Related Art

Generally, a wireless communication system is developing to diversely cover a wide range to provide such a communication service as an audio communication service, a data communication service and the like. The wireless communication is a sort of a multiple access system capable of supporting communications with multiple users by sharing available system resources (e.g., bandwidth, transmit power, etc.). For example, the multiple access system may include one of code division multiple access (CDMA) system, frequency division multiple access (FDMA) system, time division multiple access (TDMA) system, orthogonal frequency division multiple access (OFDMA) system, single carrier frequency division multiple access (SC-FDMA) system, and the like.

### SUMMARY

Accordingly, the present disclosure is directed to a method and apparatus for transmitting and receiving a signal in a wireless communication system that substantially obviates one or more problems due to limitations and disadvantages of the related art.

The object of the present disclosure is to provide a signal transmission and reception method for efficiently transmitting and receiving control and data signals in a wireless communication system and apparatus therefor.

Additional advantages, objects, and features of the disclosure will be set forth in part in the description which follows and in part will become apparent to those having ordinary skill in the art upon examination of the following or may be learned from practice of the disclosure. The objectives and other advantages of the disclosure may be realized and attained by the structure particularly pointed out in the written description and claims hereof as well as the appended drawings.

To achieve these objects and other advantages and in accordance with the purpose of the disclosure, as embodied and broadly described herein, there is provided a method of transmitting and receiving a signal by a user equipment (UE) in a wireless communication system. The method may include: configuring M resources in a time domain; and receiving one or more physical downlink shared channels (PDSCHs) on one or more of the M resources. The M resources may be a plurality of resources within one periodicity of a semi-persistent scheduling (SPS) configuration. Information on N resources available to the UE among the M resources may be received in downlink control information (DCI). The one or more PDSCHs may be received on some of the N resources.

In another aspect of the present disclosure, there is provided a method of transmitting and receiving a signal by a base station in a wireless communication system. The method may include: configuring M resources in a time domain for a UE; and transmitting one or more PDSCHs on one or more of the M resources. The M resources may be a plurality of resources within one periodicity of an SPS configuration. Information on N resources available to the UE among the M resources may be transmitted in DCI. The one or more PDSCHs may be transmitted on some of the N resources.

In another aspect of the present disclosure, there are provided an apparatus, a processor, and a storage medium for performing the signal transmission and reception method.

The apparatus may include an autonomous driving vehicle communicable with at least a UE, a network, and another autonomous driving vehicle other than the communication apparatus.

It is to be understood that both the foregoing general description and the following detailed description of the present disclosure are exemplary and explanatory and are intended to provide further explanation of the disclosure as claimed.

### BRIEF DESCRIPTION OF THE DRAWINGS

The accompanying drawings, which are included to provide a further understanding of the disclosure and are incorporated in and constitute a part of this application, illustrate embodiment(s) of the disclosure and together with the description serve to explain the principle of the disclosure. In the drawings:
FIG. 1 illustrates a radio frame structure;
FIG. 2 illustrates a resource grid during the duration of a slot;
FIG. 3 illustrates a self-contained slot structure;
FIGS. 4 to 7 illustrate signal transmission and reception methods according to the embodiments of the present disclosure; and
FIGS. 8 to 11 illustrate devices according to an embodiment of the present disclosure.

### DETAILED DESCRIPTION

Reference will now be made in detail to the preferred embodiments of the present disclosure, examples of which are illustrated in the accompanying drawings. Wherever possible, the same reference numbers will be used throughout the drawings to refer to the same or like parts.

The following technology may be used in various wireless access systems such as code division multiple access (CDMA), frequency division multiple access (FDMA), time division multiple access (TDMA), orthogonal frequency division multiple access (OFDMA), single carrier frequency division multiple access (SC-FDMA), and so on. CDMA may be implemented as a radio technology such as universal terrestrial radio access (UTRA) or CDMA2000. TDMA may be implemented as a radio technology such as global system for mobile communications (GSM)/general packet radio service (GPRS)/enhanced data rates for GSM evolution (EDGE). OFDMA may be implemented as a radio technology such as institute of electrical and electronics engineers (IEEE) 802.11 (wireless fidelity (Wi-Fi)), IEEE 802.16 (worldwide interoperability for microwave access (WiMAX)), IEEE 802.20, evolved UTRA (E-UTRA), and so on. UTRA is a part of universal mobile telecommunications system (UMTS). 3rd generation partnership project (3GPP) long term evolution (LTE) is a part of evolved UMTS (E-UMTS) using E-UTRA, and LTE-advanced (LTE-A) is an evolution of 3GPP LTE. 3GPP new radio or new radio access technology (NR) is an evolved version of 3GPP LTE/LTE-A.

For clarity of description, the present disclosure will be described in the context of a 3GPP communication system (e.g., LTE and NR), which should not be construed as limiting the spirit of the present disclosure. LTE refers to a technology beyond 3GPP TS 36.xxx Release 8. Specifically, the LTE technology beyond 3GPP TS 36.xxx Release 10 is called LTE-A, and the LTE technology beyond 3GPP TS 36.xxx Release 13 is called LTE-A pro. 3GPP NR is the technology beyond 3GPP TS 38.xxx Release 15. LTE/NR may be referred to as a 3GPP system, "xxx" specifies a technical specification number. LTE/NR may be generically referred to as a 3GPP system. For the background technology, terminologies, abbreviations, and so on as used herein, refer to technical specifications published before the present disclosure. For example, the following documents may be referred to.

### 3GPP NR

- 38.211: Physical channels and modulation
- 38.212: Multiplexing and channel coding
- 38.213: Physical layer procedures for control
- 38.214: Physical layer procedures for data
- 38.300: NR and NG-RAN Overall Description
- 38.331: Radio Resource Control (RRC) protocol specification

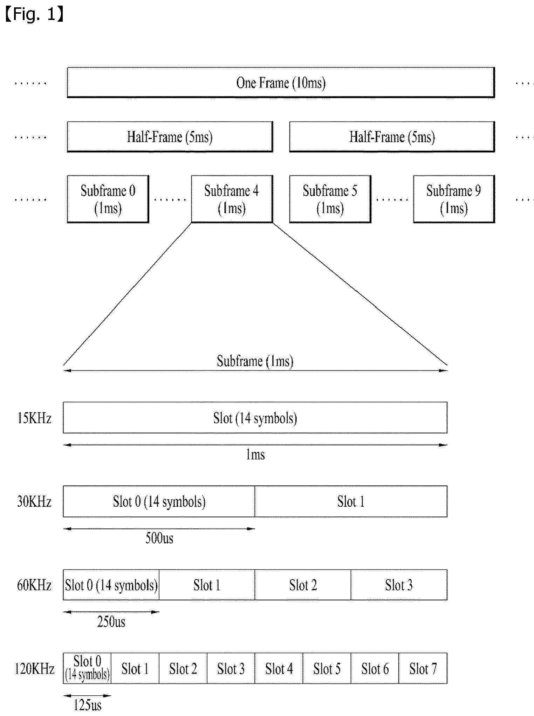

FIG. 1 illustrates a radio frame structure used for NR.

In NR, UL and DL transmissions are configured in frames. Each radio frame has a length of 10ms and is divided into two 5-ms half-frames. Each half-frame is divided into five 1-ms subframes. A subframe is divided into one or more slots, and the number of slots in a subframe depends on a subcarrier spacing (SCS). Each slot includes 12 or 14 OFDM(A) symbols according to a cyclic prefix (CP). When a normal CP is used, each slot includes 14 OFDM symbols. When an extended CP is used, each slot includes 12 OFDM symbols. A symbol may include an OFDM symbol (or a CP-OFDM symbol) and an SC-FDMA symbol (or a discrete Fourier transform-spread-OFDM (DFT-s-OFDM) symbol).

Table 1 exemplarily illustrates that the number of symbols per slot, the number of slots per frame, and the number of slots per subframe vary according to SCSs in a normal CP case.

**[Table 1]**

| SCS (15^{∗}2^u) | N^{slot}_{symb} | N^{frame,u}ₛₗₒₜ | N^{subframe,u}ₛₗₒₜ |
|---|---|---|---|
| 15KHz (u=0) | 14 | 10 | 1 |
| 30KHz (u=1) | 14 | 20 | 2 |
| 60KHz (u=2) | 14 | 40 | 4 |
| 120KHz (u=3) | 14 | 80 | 8 |
| 240KHz (u=4) | 14 | 160 | 16 |

| | | | |
|---|---|---|---|
| * N^{slot}_{symb}: number of symbols in a slot * N^{frame,u}ₛₗₒₜ: number of slots in a frame * N^{subframe,u}ₛₗₒₜ: number of slots in a subframe | | | |

Table 2 illustrates that the number of symbols per slot, the number of slots per frame, and the number of slots per subframe vary according to SCSs in an extended CP case.

**[Table 2]**

| SCS (15^{∗}2^u) | N^{slot}_{symb} | N^{frame,u}ₛₗₒₜ | N^{subframe,u}ₛₗₒₜ |
|---|---|---|---|
| 60KHz (u=2) | 12 | 40 | 4 |

In the NR system, different OFDM(A) numerologies (e.g., SCSs, CP lengths, and so on) may be configured for a plurality of cells aggregated for one UE. Accordingly, the (absolute time) duration of a time resource (e.g., a subframe, a slot, or a transmission time interval (TTI)) (for convenience, referred to as a time unit (TU)) composed of the same number of symbols may be configured differently between the aggregated cells.

In NR, various numerologies (or SCSs) may be supported to support various 5th generation (5G) services. For example, with an SCS of 15 kHz, a wide area in traditional cellular bands may be supported, while with an SCS of 30 kHz or 60 kHz, a dense urban area, a lower latency, and a wide carrier bandwidth may be supported. With an SCS of 60 kHz or higher, a bandwidth larger than 24.25 kHz may be supported to overcome phase noise.

An NR frequency band may be defined by two types of frequency ranges, FR1 and FR2. FR1 and FR2 may be configured as described in Table 3 below. FR2 may be millimeter wave (mmW).

**[Table 3]**

| Frequency Range designation | Corresponding frequency range | Subcarrier Spacing |
|---|---|---|
| FR1 | 450MHz - 7125MHz | 15, 30, 60kHz |
| FR2 | 24250MHz - 52600MHz | 60, 120, 240kHz |

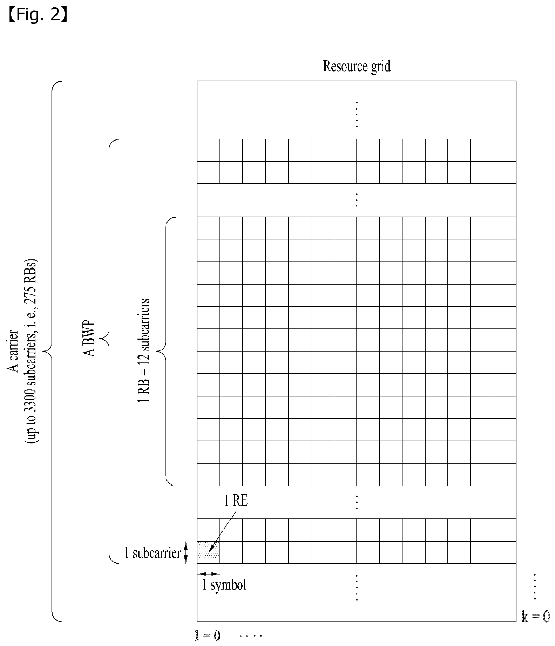

FIG. 2 illustrates a resource grid during the duration of one slot.

A slot includes a plurality of symbols in the time domain. For example, one slot includes 14 symbols in a normal CP case and 12 symbols in an extended CP case. A carrier includes a plurality of subcarriers in the frequency domain. A resource block (RB) may be defined by a plurality of (e.g., 12) consecutive subcarriers in the frequency domain. A plurality of RB interlaces (simply, interlaces) may be defined in the frequency domain. Interlace m∈{0, 1, ..., M-1} may be composed of (common) RBs {m, M+m, 2M+m, 3M+m,...}. M denotes the number of interlaces. A bandwidth part (BWP) may be defined by a plurality of consecutive (physical) RBs ((P)RBs) in the frequency domain and correspond to one numerology (e.g., SCS, CP length, and so on). A carrier may include up to N (e.g., 5) BWPs. Data communication may be conducted in an active BWP, and only one BWP may be activated for one UE. Each element in a resource grid may be referred to as a resource element (RE), to which one complex symbol may be mapped.

In a wireless communication system, a UE receives information from a BS in downlink (DL), and the UE transmits information to the BS in uplink (UL). The information exchanged between the BS and UE includes data and various control information, and various physical channels/signals are present depending on the type/usage of the information exchanged therebetween. A physical channel corresponds to a set of resource elements (REs) carrying information originating from higher layers. A physical signal corresponds to a set of REs used by physical layers but does not carry information originating from the higher layers. The higher layers include a medium access control (MAC) layer, a radio link control (RLC) layer, a packet data convergence protocol (PDCP) layer, a radio resource control (RRC) layer, and so on.

DL physical channels include a physical broadcast channel (PBCH), a physical downlink shared channel (PDSCH), and a physical downlink control channel (PDCCH). DL physical signals include a DL reference signal (RS), a primary synchronization signal (PSS), and a secondary synchronization signal (SSS). The DL RS includes a demodulation reference signal (DM-RS), a phase tracking reference signal (PT-RS), and a channel state information reference signal (CSI-RS). UL physical channel include a physical random access channel (PRACH), a physical uplink shared channel (PUSCH), and a physical uplink control channel (PUCCH). UL physical signals include a UL RS. The UL RS includes a DM-RS, a PT-RS, and a sounding reference signal (SRS).

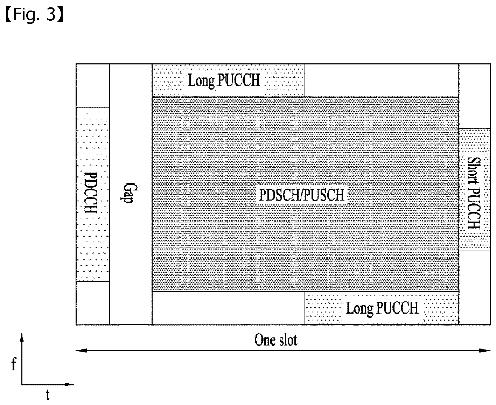

FIG. 3 illustrates a structure of a self-contained slot.

In the NR system, a frame has a self-contained structure in which a DL control channel, DL or UL data, a UL control channel, and the like may all be contained in one slot. For example, the first N symbols (hereinafter, DL control region) in the slot may be used to transmit a DL control channel, and the last M symbols (hereinafter, UL control region) in the slot may be used to transmit a UL control channel. N and M are integers greater than or equal to 0. A resource region (hereinafter, a data region) that is between the DL control region and the UL control region may be used for DL data transmission or UL data transmission. For example, the following configuration may be considered. Respective sections are listed in a temporal order.

In the present disclosure, a base station (BS) may be, for example, a gNode B (gNB).

### UL Physical Channels/Signals

### (1) PUSCH

A PUSCH may carry UL data (e.g., uplink shared channel (UL-SCH) transport block (TB)) and/or uplink control information (UCI). The PUSCH may be transmitted based on a cyclic prefix orthogonal frequency division multiplexing (CP-OFDM) waveform or a discrete Fourier transform spread OFDM (DFT-s-OFDM) waveform. When the PUSCH is transmitted based on the DFT-s-OFDM waveform, the UE may transmit the PUSCH by applying transform precoding. For example, when the transform precoding is not allowed (e.g., when the transform precoding is disabled), the UE may transmit the PUSCH based on the CP-OFDM waveform. When the transform precoding is allowed (e.g., when the transform precoding is enabled), the UE may transmit the PUSCH based on the CP-OFDM waveform or DFT-s-OFDM waveform. PUSCH transmission may be dynamically scheduled by a PDCCH (dynamic scheduling) or semi-statically scheduled by higher layer signaling (e.g., RRC signaling) (and/or Layer 1 (L1) signaling (e.g., PDCCH)) (configured scheduling (CS)). Therefore, in the dynamic scheduling, the PUSCH transmission may be associated with the PDCCH, whereas in the CS, the PUSCH transmission may not be associated with the PDCCH. The CS may include PUSCH transmission based on a Type-1 configured grant (CG) and PUSCH transmission based on a Type-2 CG. For the Type-1 CG, all parameters for PUSCH transmission may be signaled by the higher layer. For the Type-2 CG, some parameters for PUSCH transmission may be signaled by higher layers, and the rest may be signaled by the PDCCH. Basically, in the CS, the PUSCH transmission may not be associated with the PDCCH.

### (2) PUCCH

A PUCCH may carry UCI. The UCI includes the following information.
- Scheduling request (SR): The SR is information used to request a UL-SCH resource.
- Hybrid automatic repeat and request acknowledgement) (HARQ-ACK): The HARQ-ACK is a signal in response to reception of a DL signal (e.g., PDSCH, SPS release PDCCH, etc.). The HARQ-ACK response may include positive ACK (ACK), negative ACK (NACK), DTX (Discontinuous Transmission), or NACK/DTX. The HARQ-ACK may be interchangeably used with A/N, ACK/NACK, HARQ-ACK/NACK, and the like. The HARQ-ACK may be generated on a TB/CBG basis.
- Channel Status Information (CSI): The CSI is feedback information on a DL channel. The CSI includes a channel quality indicator (CQI), a rank indicator (RI), a precoding matrix indicator (PMI), a precoding type indicator (PTI), and so on.

### DL Physical Channel/Signal

### (1) PDSCH

A PDSCH carries DL data (e.g., DL-shared channel transport block (DL-SCH TB)). The TB is coded into a codeword (CW) and then transmitted after scrambling and modulation processes. The CW includes one or more code blocks (CBs). One or more CBs may be grouped into one code block group (CBG). Depending on the configuration of a cell, the PDSCH may carry up to two CWs. Scrambling and modulation may be performed for each CW, and modulation symbols generated from each CW may be mapped to one or more layers. Each layer may be mapped to resources together with a DMRS after precoding and transmitted on a corresponding antenna port. The PDSCH may be dynamically scheduled by a PDCCH (dynamic scheduling). Alternatively, the PDSCH may be semi-statically scheduled based on higher layer (e.g., RRC) signaling (and/or Layer 1 (L1) signaling (e.g., PDCCH)) (configured scheduling (CS)). Therefore, in the dynamic scheduling, PDSCH transmission is accompanied by the PDCCH, whereas in the CS, PDSCH transmission may not be accompanied by the PDCCH. The CS may include semi-persistent scheduling (SPS).

### (2) PDCCH

A PDCCH carries Downlink Control Information (DCI). For example, the PDCCH (i.e., DCI) may carry: transmission formats and resource allocation of a DL-SCH; frequency/time resource allocation information on an uplink shared channel (UL-SCH); paging information on a paging channel (PCH); system information on a DL-SCH; time/frequency resource allocation information on a higher layer control message such as a random access response (RAR) transmitted over a PDSCH; transmit power control commands; and information on activation/deactivation of SPS/CS. Various DCI formats may be provided depending on information in DCI.

### 1. Occurrence of Data Jitter

The above contents are applicable in combination with methods proposed in the present disclosure, which will be described later. Alternatively, the contents may clarify the technical features of the methods proposed in the present disclosure.

In addition, the following methods may be equally applied to the above-described NR system (licensed bands) or shared spectrum. Thus, it is obvious that the terms, expressions, and structures in this document may be modified to be suitable for the system in order to implement the technical idea of the present disclosure in the corresponding system.

The NR system supports various numerologies (or SCSs) to provide various 5G services. For example, the NR system may support a wide area in conventional cellular bands with an SCS of 15 kHz and support a dense urban area and a wide carrier bandwidth with lower latency with an SCS of 30/60 kHz. For an SCS above 60 kHz, NR may support a bandwidth of 24.25 GHz or higher. According to Release 16, NR frequency bands are divided into two frequency ranges (FR1 and FR2), which may be configured as shown in Table 3. In addition, discussions are ongoing to support future NR systems operating above frequency bands defined in FR1/FR2 (for example, 52.6 GHz to 71 GHz).

Frequency bands above FR1 and FR2 (e.g., bands from 52.6 GHz to 114.25 GHz, and more particularly, bands from 52.6 GHz to 71 GHz) may be referred to as FR2-2. The waveforms, SCSs, CP lengths, timings, etc. defined for FR1 and FR2 in the current NR system may not be applied to FR2-2.

Hereinafter, methods for reducing power consumption and increasing the efficiency of radio resources while guaranteeing the availability and reliability of transmission resources when video information for extended reality (XR) services is transmitted on preconfigured resources such as SPS/CG of the NR wireless communication system will be described. Herein, SPS/CG may be interpreted as SPS and/or CG.

XR refers to ultra-realistic technologies and services that provide users with an environment in which the users are capable of communicating and living without time and space restrictions in a virtual space similar to reality, based on virtual reality (VR), augmented reality (AR), mixed reality (MR), holograms, etc. XR is one of the major services to be introduced in the NR wireless communication system. Typically, XR has specific traffic with one or more DL video streams closely synchronized with frequent UL pose/control updates. In addition, XR has a high data rate and a tight packet delay budget (PDB).

In the NR system, the UE may be configured with one or more SPS PDSCHs and/or CG PUSCHs for periodic transmission and reception, low latency, and/or low PDCCH overhead. Each SPS/CG configuration may include repeated resources configured and/or indicated with a periodicity. That is, resources configured and/or indicated by each SPS/CG configuration may be repeated with a specific periodicity, and the UE may perform DL reception and/or UL transmission on the corresponding resources without a separate PDCCH reception process.

There are various types of XR data. Among the various types of data, sensor information, location information, and/or video data of the UE, which are generally reported with a specific periodicity, may be transmitted and received on SPS and/or CG resources. The data generation time (or traffic arrival time) of data generated for XR is not constant due to the following reasons: video encoding time, sensor measurement time, higher layer operation, and/or network routing change. The non-constant data generation may be referred to as jitter.

When a resource is allocated to a location sufficiently distant in time from the expected traffic arrival time in consideration of jitter, the availability of the resource may be guaranteed, but there may be a time delay. On the other hand, when an SPS/CG resource with a fixed periodicity is allocated to the expected traffic arrival time, if jitter occurs, there may be a larger time delay due to a waiting time until a next available resource.

Considering that some data are generated based on events, it may be difficult to accurately determine a time at which the data are generated. To reduce a time delay caused by scheduling of data whose occurrence time is unknown, it may be considered to use SPS/CG resources. That is, it is discussed that when sufficient resources are allocated with a short periodicity in preparation for data generation, the UE or BS is allowed to selectively use some of the allocated resources without using the rest.

However, in order to skip transmission and reception, it is necessary to carefully consider response signals for determining the reception and transmission between the UE and BS. If the UE transmits a response signal for transmission that the UE has not received, the BS needs to prepare resources for the UE to transmit the response signal. According to this skipping method, since a sufficiently large number of radio resources need to be configured, preparation for response signals may be heavy loads in terms of UL. In addition, considering that resources may be multiplexed between UEs, the burden of UL resources needs to be considered more carefully.

Since low latency is essential for the quality of XR services, it is necessary to consider a method of minimizing the effect of latency while reducing the effect of jitter. To address this issue, some of multiple SPS/CG resources configured between the UE and BS may be selectively used.

Hereinafter, proposed methods will be described based on DL SPS resources and UL CG resources, which are semi-statically configured, but the proposed methods are not limited thereto. The proposed methods may also be extended and applied to radio resources allocated by dynamic scheduling to be received by the UE.

For example, a method for the UE to determine one HARQ-ACK timing for a plurality of DL radio resources allocated to the UE may be used regardless of an SPS PDSCH and a PDSCH indicated by dynamic scheduling. In addition, when a plurality of radio resources are not configured semi-statically but configured by dynamic indication, for example, when the plurality of radio resources are configured at once by DCI, the methods proposed in the present disclosure may be applied. Accordingly, unless stated otherwise, the methods proposed in this specification may be applied to all types of transmission/reception schemes expected by the BS and UE as long as the principles of the present disclosure are not infringed. In the present disclosure, the term SPS is used as a general concept for referring to semi-statically configured radio resources (e.g., DL/UL SPS, CG, etc.) for convenience of description.

In the present disclosure, a transmission occasion (TO) means a radio resource configured for SPS/CG (e.g., SPS PDSCH or CG PUSCH). An entity performing transmission (i.e., the BS in the case of DL or the UE in the case of UL) on the TO may attempt transmission on each TO, and a receiver (i.e., the UE in the case of DL or the BS in the case of UL) may expect transmission and attempt reception on each TO.

In the present disclosure, the NR system is described as an example to explain the principles of the present disclosure, but the proposed methods are not specifically limited to NR transmission/reception unless otherwise specified. In addition, the features and structures of XR services are described as examples to explain the principles of the present disclosure, but the proposed methods do not specifically limit the support of the XR services unless otherwise stated. Therefore, it is obvious that even if there is no explanation, the methods proposed in the present disclosure are applicable to all wireless communication transmission/reception structures and services as long as the principles of the disclosure are not infringed.

The present disclosure describes methods of classifying a plurality of SPS/CG resources configured between the UE and BS by purpose and selectively using some of the SPS/CG resources in preparation for the occurrence of jitter.

To this end, the proposed methods may include a method for the BS to allocate SPS/CG radio resources to the UE and a method of receiving and transmitting the SPS/CG resources. The proposed methods may include a method of transmitting a HARQ-ACK PUCCH response in response to reception of an SPS PDSCH and a method of receiving DCI retransmitted from the BS over a PDCCH after transmission of a CG PUSCH. In addition, the proposed methods may also include a process in which the UE transmits a signal and channel to inform its capabilities and/or service requirements and the BS receives the signal and channel.

According to the methods proposed in the present disclosure, some of the following methods may be selected and applied. Each method may be applied independently without any combination, or one or more of the methods may be applied in combination. Some of the terms, symbols, and orders used herein to describe the present disclosure may be replaced with other terms, symbols, and orders as long as the principles of the present disclosure are maintained.

### 1.1. Allocation of multiple SPS/CG resources in consideration of jitter and transmission and reception method

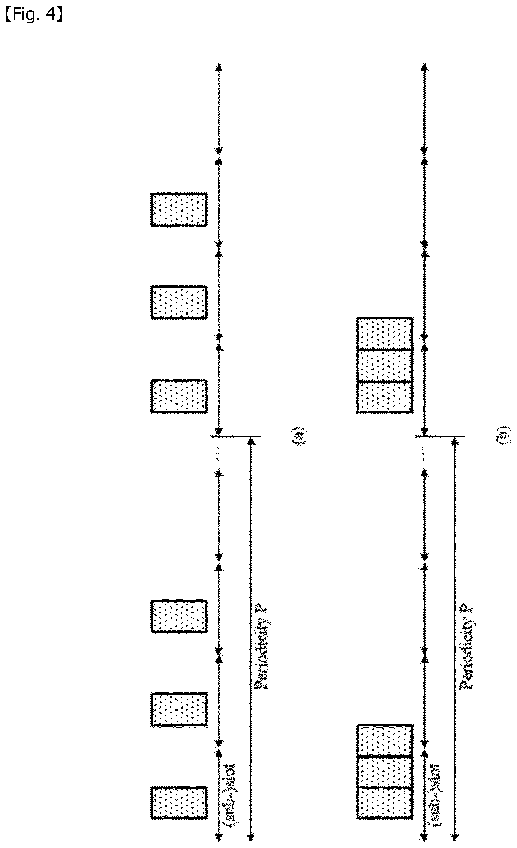

When the BS configures and activates periodic radio resources (e.g., SPS or CG resources) for the UE, the BS may allocate a plurality of radio resources within one periodicity to the UE. Since the conventional SPS/CG configuration includes only one resource within one periodicity if repetitive transmission is not configured, allocating a plurality of radio resources that are not for repetitive transmission within one periodicity may be considered as a change in consideration of data jitter. Even when repetitive transmission is configured, allocating more resources than resources required for the repetitive transmission within one periodicity may be considered as a change in consideration of data jitter. A plurality of radio resources may be allocated as follows: the same time/frequency resource allocation within a slot is repeated at regular intervals (e.g., one slot) as shown in FIG. 4(a). Alternatively, a plurality of radio resources may be allocated as follows: radio resources having the same length are assigned to symbols consecutive to a first radio resource as shown in FIG. 4(b). In FIG. 4, it is illustrated that three radio resources are included within a periodicity P. However, the number of radio resources may not be limited thereto, that is, N radio resources may be allocated within the periodicity P. The number N of radio resources may be determined by Layer-1 (L1) (i.e., physical layer) signaling and/or higher layer signaling.

To perform transmission, the BS/UE may use one or some of the plurality of SPS/CG radio resources within the periodicity. Herein, the symbol "j" may be interpreted as and/or. For example, the BS/UE may be interpreted as the BS and/or UE, and the SPS/CG may be interpreted as the SPS and/or CG. The BS/UE may select the earliest radio resource for carrying a TB including user data of the BS/UE by considering a time at which the user data is generated. To increase transmission reliability, the BS/UE may repeatedly transmit the TB on the plurality of radio resources. In this case, the number of times that the transmission is repeated, K may be determined by L1 signaling and/or higher layer signaling.

To receive the transmission from the BS/UE based on the time at which the user data is generated and the indicated/configured value of N/K, the UE/BS may receive the transmission on some of the plurality of radio resources (R₁, R₂, ..., and R_{N}) and then perform decoding by combining the radio resources. The radio resources to be combined may be at least one of the following resources:
- A radio resource Rᵢ where DMRS transmission from the BS/UE is detected;
- Radio resources Rᵢ₊₁, Rᵢ₊₂, ..., and R_{i+K-1} after the radio resource Rᵢ where the DMRS transmission is detected;
- Radio resources allocated after Rᵢ within a periodicity including the radio resource Rᵢ where the DMRS transmission is detected; and
- Radio resources explicitly indicated by the BS/UE.

The BS/UE may transmit information on radio resources to be received by the UE/BS together with the TB.

The information on the radio resources to be received by the UE/BS may be included in a PDSCH or PUSCH carrying the TB. The information on the radio resources may be additional information, which is different from the user data, and thus, the information may be encoded separately from the user data. The reason for this is to receive the information on the radio resources, regardless of whether the user data included in the PDSCH/PUSCH is successfully received.

Information on radio resources to be received by the UE may be received on PDCCH radio resources from the BS in the form of DCI. The DCI may be group-common DCI to reduce the burden of the PDCCH. The DCI may be transmitted before transmission of the PDSCH/PUSCH carrying the user data. Alternatively, the DCI may be transmitted on a first PDCCH monitoring occasion (MO) after the starting symbol of each periodicity. The DCI may include information on radio resources existing within one periodicity.

The information on the radio resources may include the total number of times of transmission, a position at which transmission starts, a position at which transmission ends, and/or a time from the end of current transmission to the start of next transmission. The unit of information included in the information on the radio resources may be an SPS/CG TO. For example, the position at which transmission starts or ends may mean the order of the position at which the transmission starts or ends on TOs within a periodicity. Alternatively, an SPS/CG periodicity may be used as the unit of information included in the information on the radio resources. For example, assuming that the periodicity of an SPS/CG configuration is P, an integer representing a time length of P, 2P, 3P, ..., or NP, which is an integral multiple of P, may be used as a value indicating the start of next transmission.

### 1.2. Dynamic allocation of multiple resources in consideration of jitter and transmission and reception method

Even in the case of transmission through dynamic scheduling, it is obvious that there may be effects of jitter. To solve jitter problems that may occur in UL transmission of the UE, the BS may provide scheduling information indicating a plurality of radio resources to the UE in DCI. The UE may perform transmission by randomly selecting some of the scheduled radio resources.

The scheduling information indicating the plurality of radio resources may be provided by a time-domain resource allocation (TDRA) field of DCI and each row of a TDRA table associated with the field. More specifically, the TDRA field included in the DCI may indicate a row index of a TDRA table configured through higher layer signaling. One row of the TDRA table may include information on an interval between the received scheduling DCI and a first radio resource (a delay from a UL grant to a PUSCH) K2, PUSCH mapping types of the plurality of radio resources, a starting symbol, and a symbol length. The PUSCH mapping type may correspond to information used to determine the location of a DMRS symbol for PUSCH transmission. Herein, the PUSCH mapping type may refer to the PUSCH mapping type defined in Clause 6.1.2.1 of 3GPP TS 38.214.

Radio resources indicated by the scheduling information indicating the plurality of radio resources may be allocated to each slot. For example, assuming that radio resources each having a starting symbol and symbol length are R₁, R₂, ..., and R_{N}, the radio resources may be allocated to consecutive slots as follows: the first radio resource R₁ is allocated to slot i, the second radio resource R₂ is allocated to slot i+1, and the N-th radio resource R_{N} is allocated to slot i+N-1. Alternatively, based on the scheduling information indicating the plurality of radio resources, radio resources each having an indicated symbol length may be allocated to consecutive symbols from the first radio resource. Alternatively, K2, which is the delay from a UL grant to a PUSCH, that is, the interval between scheduling DCI and a radio resource, may be indicated for each radio resource. Alternatively, a given value of K2 may be applied to all radio resources. That is, a plurality of given radio resources may be configured in one slot.

The DCI including the scheduling information indicating the plurality of radio resources may include at least one of the following pieces of information:
- The number N of valid radio resources among the plurality of indicated radio resources;
- The position (order) S of a first valid radio resource among the plurality of indicated radio resources;
- The number K of radio resources to be used for indicated transmission;
- A bitmap of valid radio resources among the plurality of indicated radio resources, wherein the availability of each of the indicated radio resources may be represented by a bitmap having a length of M, where M may be the maximum number of radio resources that the row of one TDRA table may have or has; and
- Among the plurality of indicated radio resources, (i) the number N of valid radio resources and (ii) the position (order) S of the first valid radio resource may be provided in one piece of information obtained by joint coding. Assuming that the maximum number of radio resources that the row of one TDRA table may have or has is M, the one piece of information obtained by joint coding may represent the position S of the first radio resource and the number N of valid radio resources with M*(M+1)/2 state values. A jointly coded information value, Iⱼₒᵢₙₜ may be derived according the following equation.

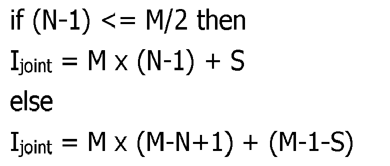

Depending on when the user data of the UE is generated, the UE may perform transmission on some of the plurality of scheduled radio resources (R₁, R₂, ..., and R_{N}). The BS may receive the transmission on some of the plurality of radio resources (R₁, R₂, ..., and R_{N}) and then perform decoding by combining the radio resources. The radio resources to be combined may be at least one of the following resources:
- A radio resource Rᵢ where DMRS transmission from the BS/UE is detected;
- Radio resources Rᵢ₊₁, Rᵢ₊₂, ..., and R_{i+K-1} after the radio resource Rᵢ where the DMRS transmission is detected;
- Radio resources Rᵢ₊₁, Rᵢ₊₂, ..., and R_{N} allocated after the radio resource Rᵢ where the DMRS transmission is detected; and
- Radio resources explicitly indicated by the BS/UE.

The BS/UE may transmit information on radio resources to be received by the UE/BS together with a TB.

The information on the radio resources to be received by the UE/BS may be transmitted over a PDSCH or PUSCH carrying the TB. The information on the radio resources may be additional information, which is different from the user data, and thus, the information may be encoded separately from the user data. The reason for this is to receive the information on the radio resources, regardless of whether the user data included in the PDSCH/PUSCH is successfully received.

When a plurality of radio resources are dynamically indicated to the UE in DCI including scheduling information indicating the plurality of radio resources as described in Section 1.2, a plurality of given radio resources may overlap in the time domain. When the plurality of radio resources overlap in the time domain, the UE may transmit a signal and/or channel by selecting one radio resource from among the plurality of radio resources. In this case, at least one of the following may be considered to allow the BS to easily receive the signal and/or channel.
- Each radio resource may have different starting and ending points.
- Each radio resource may have the same DMRS symbol position. To this end, a different method of determining a DMRS symbol position may be applied to each radio resource. For example, DMRS symbol positions for the remaining radio resources may be determined with respect to a first scheduled radio resources (earliest scheduled radio resource in the time domain). As another example, for a plurality of scheduled radio resources, resources from the first radio resource in the time domain to the last radio resource in the time domain may be assumed to be one large radio resource. Then, the DMRS symbol position may be determined based on the corresponding assumption.
- For each radio resource, the UE may use a different TB size based on a given modulation and coding scheme (MCS).
- Each radio resource may be associated with the same HARQ process.
- At least one radio resource and at least one symbol may be shared for each radio resource. That is, the plurality of radio resources may overlap with each other in the time domain.
- The UE and/or BS may transmit or receive a signal and/or channel by selecting only one radio resource from among the radio resources.

### 1.2-1. SPS/CG resource allocation and configuration based on dynamic allocation of multiple resources

When a plurality of radio resources are dynamically indicated to the UE in DCI including scheduling information indicating the plurality of radio resources as described in Method 1.2., SPS and/or CG configurations may be activated by the DCI including the scheduling information indicating the plurality of radio resources. For example, the BS may provide activation DCI including the scheduling information indicating the plurality of radio resources to the UE. Upon receiving the activation DCI, the UE may assume that a plurality of given radio resources are periodically and repeatedly scheduled for each period of time included in the associated SPS and/or CG configuration.

When the UE is scheduled with a plurality of radio resources for SPS PDSCHs, if the plurality of radio resources are associated with one HARQ process and overlap in the time domain, the UE needs to receive a signal and/or channel on only one of the plurality of radio resources. Selecting one of the plurality of radio resources may depend on UE implementation. Alternatively, the UE may receive a signal and/or channel by selecting one PDSCH from among a plurality of radio resources after receiving DMRSs of PDSCHs. Specifically, the BS may select one SPS PDSCH from among a plurality of SPS PDSCHs based on a traffic arrival time and a required TB size and then transmit a signal and/or channel. The UE may attempt to receive and detect DMRSs of the plurality of scheduled SPS PDSCHs and then estimate an SPS PDSCH actually transmitted by the BS based on reception results. The UE may attempt to receive the estimated SPS PDSCH and then transmit a HARQ-ACK for the received PDSCH.

When the UE receives a plurality of PDSCHs or SPS PDSCHs overlapping in the time domain in one piece of DCI, the UE may generate one HARQ-ACK response for the plurality of PDSCHs or SPS PDSCHs as HARQ-ACK responses for the plurality of PDSCHs or SPS PDSCHs. In this case, TDRA associated with the one HARQ-ACK response may be based on allocation information on a first radio resource among a plurality of given radio resources. Specifically, when the UE generates a HARQ-ACK codebook, the UE may consider information on a first start and length indicator value (SLIV) in TDRA information in order to determine the bit position of a HARQ-ACK associated with a PDCSH, which is received on a radio resource within the corresponding HARQ-ACK codebook for a plurality of radio resources given by one piece of DCI. Determining the bit positions in the HARQ-ACK codebook in consideration of the corresponding SLIV information may be based on the Type-1 HARQ-ACK codebook generation method described in Clause 9.1.2 of 3GPP TS 38.213 v17.1.

### 1.3. Method for dynamic indication of resource use

The BS may indicate/configure one or more SPS/CG radio resources to the UE. When a plurality of SPS/CG radio resources are allocated within a periodicity or within a certain period of time, the BS may implicitly or explicitly indicate to the UE a valid PDSCH reception occasion or a valid PUSCH TO among the plurality of SPS/CG radio resources. Accordingly, when the same time-frequency radio resource is allocated to multiple UEs at the same time, transmission reliability may be guaranteed by multiplexing the use of resources between UEs under the control of the BS and adjusting the number of radio resources used for transmission. This may be particularly useful when the UE uses all radio resources indicated/configured within the periodicity to transmit and receive one TB.

To explicitly indicate to the UE the PDSCH reception occasion or PUSCH TO, the BS may transmit relevant information on a PDCCH radio resource in the form of DCI. The DCI may be group-common DCI to reduce the burden of the PDCCH. The DCI may be transmitted before transmission of a PDSCH/PUSCH carrying user data. Alternatively, the DCI may be transmitted on a first PDCCH MO after the starting symbol of each periodicity. The DCI may include information on radio resources existing within one periodicity.

DCI including scheduling information indicating a plurality of radio resources may include at least one of the following pieces of information:
- The number N of valid radio resources among the plurality of indicated radio resources;
- The position (order) S of a first valid radio resource among the plurality of indicated radio resources;
- The number K of radio resources to be used for indicated transmission; and
- A bitmap of valid radio resources among the plurality of indicated radio resources, wherein the availability of each of the indicated radio resources may be represented by a bitmap having a length of M, where M may be the maximum number of radio resources that the row of one TDRA table may have or has.

The DCI including the scheduling information indicating the plurality of radio resources may be received only in a specific search space and/or CORESET. In this case, the BS may indicate to the UE the specific search space and/or CORESET for receiving the corresponding DCI. The duration of the corresponding search space may be related to the duration (e.g., the number of frames per second of a video stream) of a service (signal and/or channel related thereto) transmitted and/or received by the UE on the plurality of radio resources. Specifically, for a video stream, a time duration close to 1/X, which is the reciprocal of the number of frames per second X, may be set to the search space duration.

Among the plurality of indicated radio resources, (i) the number N of valid radio resources and (ii) the position (order) S of the first valid radio resource may be provided in one piece of information obtained by joint coding. Assuming that the maximum number of radio resources that the row of one TDRA table may have or has is M, the one piece of information obtained by joint coding may represent the position S of the first radio resource and the number N of valid radio resources with M*(M+1)/2 state values. A jointly coded information value, Iⱼₒᵢₙₜ may be derived according the following equation.

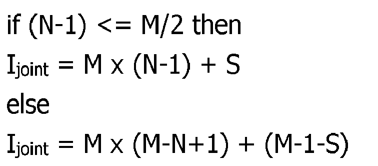

To implicitly indicate to the UE the PDSCH reception occasion or PUSCH TO, the BS may transmit additional information on the user data to the UE through higher layer (L2/3) signaling (e.g., MAC CE or RRC parameter). Alternatively, to implicitly indicate to the UE the PDSCH reception occasion or PUSCH TO, the UE may transmit additional information on the user data to the BS through L2 signaling (e.g., MAC CE). The additional information may include at least one of the following:
- The frame per second of video included in the user data;
- The bitrate of the video stream included in the user data; and
- The average arrival time of periodic user data (inter-arrival time)

### 1.4. Grouping of transmission/reception occasions based on resource use time

When multiple SPS/CG configurations are configured or enabled for the UE, and more particularly, when multiple SPS/CG TOs with different periodicities are allocated to the UE, the UE may configure one TO set S by grouping some TOs included in the plurality of SPS/CG configurations to apply the operations described in Sections 1.1 to 1.3. The operations described in Sections 1.1 to 1.3 may be performed within the configured TO set S. For example, N radio resources included in the TO set S may correspond to the plurality of radio resources (R₁, R₂, ..., and R_{N}) described in Sections 1.1 to 1.3.

To configure the TO set S, at least one of the following methods may be used.
- Option 1: A set of K consecutive and non-overlapping TOs may be configured from a resource confirmed to be used for transmission of the BS/UE based on the following methods: blind decoding, DMRS detection, and energy detection.

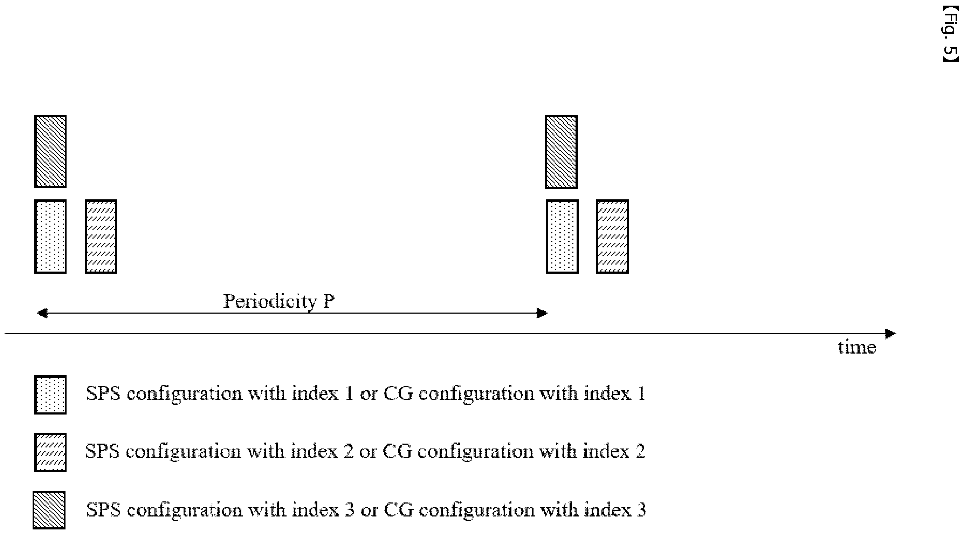

To determine which of two or more overlapping TOs to be included in a set, a configuration index of an SPS/CG configuration associated with the TO, a priority thereof, and/or a HARQ-ACK codebook index associated therewith may be considered. For example, a TO having the lowest configuration index among the overlapping TOs may be determined to be included in the set. For example, as shown in FIG. 5, if a resource configured by an SPS/CG configuration with index 1 and a resource configured by an SPS/CG configuration with index 3 overlap, the resource configured by the SPS configuration with index 1 may be included in the TO set S. Since there are no resources overlapping with the resource by the SPS/CG configuration with index 2, the resource by the SPS/CG configuration with index 2 may be included in the TO set S. In particular, for TOs given by multiple SPS configurations, a PDSCH selected according to the following operations extracted from Clause 5.1 of 3GPP TS 38.214 may be determined to be included in the set.

**[Table 4]**

| | |
|---|---|
| | If more than one PDSCH on a serving cell each without a corresponding PDCCH transmission are in a slot, after resolving overlapping with symbols in the slot indicated as uplink by *tdd-UL-DL-ConfigurationCommon,* or by *tdd-UL-DL-ConfigurationDedicated,* a UE receives one or more PDSCHs without corresponding PDCCH transmissions in the slot as specified below. |
| | - Step 0: set *j=0,* where *j* is the number of selected PDSCH(s) for decoding. *Q* is the set of activated PDSCHs without corresponding PDCCH transmissions within the slot |
| | - Step 1: A UE receives one PDSCH with the lowest configured *sps-ConfigIndex* within *Q,* set *j=j+1*. Designate the received PDSCH as survivor PDSCH. |
| | - Step 2: The survivor PDSCH in step 1 and any other PDSCH(s) overlapping (even partially) with the survivor PDSCH in step 1 are excluded from *Q.* |
| | - Step 3: Repeat step 1 and 2 until *Q* is empty or *j* is equal to the number of unicast/multicast PDSCHs in a slot supported by the UE |

For two radio resources adjacent in the time domain within the TO set S, the interval between the ending symbol of a preceding radio resource and the starting symbol of a following radio resource may be less than or equal to a predetermined symbol length. Accordingly, a second radio resource having a symbol interval less than or equal to a threshold from a first radio resource on which transmission is confirmed may be included in the TO set S. In addition, a third radio resource having a symbol interval less than or equal to the threshold from the second radio resource may be included in the TO set S.

The distance between the first radio resource and any radio resource in the time domain within the TO set S may be less than or equal to a predetermined symbol length. Specifically, only a TO of which the starting symbol (or ending symbol) is within the predetermined symbol length from the starting symbol of the first radio resource of the set may be included in the TO set S. In other words, radio resources within a predetermined time distance from a radio resource on which transmission is confirmed may be included in the TO set S.
- Option 2: TOs explicitly indicated by the BS/UE may be grouped into a set.

The BS/UE may transmit information on TOs to be received by the UE/BS together with a TB.

Information on radio resources to be received by the UE/BS may be transmitted over a PDSCH or PUSCH carrying the TB. The information on the radio resources is additional information, which is different from user data, and thus, the information may be encoded separately from the user data. The reason for this is to receive the information on the radio resources, regardless of whether the user data included in the PDSCH/PUSCH is successfully received.

Information on the TOs to be received by the UE may be transmitted in the form of DCI on a PDCCH radio resources from the BS. The DCI may be group-common DCI to reduce the burden of the PDCCH. The DCI may be transmitted before transmission of a PDSCH/PUSCH carrying user data. Alternatively, the DCI may be transmitted on a first PDCCH MO after the starting symbol of each periodicity. The DCI may include information on radio resources existing within one periodicity.

The information on the radio resources may include the total number of times of transmission, a position at which transmission starts, a position at which transmission ends, and/or a time from the end of current transmission to the start of next transmission. The unit of information included in the information on the TOs may be an SPS/CG TO. For example, the position at which transmission starts or ends may mean the order of the position at which the transmission starts or ends on TOs within a periodicity. Alternatively, an SPS/CG periodicity may be used as the unit of information included in the information on the TOs. For example, assuming that the periodicity of an SPS/CG configuration is P, an integer representing a time length of P, 2P, 3P, ..., or NP, which is an integral multiple of P, may be used as a value indicating the start of next transmission.

### 1.5. Multiple SPS/CG configurations for priority application and grouping thereof

When the BS configures and activates periodic radio resources (e.g., SPS or CG resources) for the UE, the BS may configure a plurality of SPS and/or CG configurations (i.e., a plurality of SPS configurations and/or a plurality of CG configurations) for the UE. Radio resources of each SPS and/or CG configuration may be spaced apart from each other at a predetermined time interval or at an arbitrary interval. In addition, the radio resources of each SPS and/or CG configuration may have the same or different periodicities. The radio resources of each SPS and/or CG configuration may overlap with each other in the time domain. The BS or UE may use the plurality of SPS and/or CG configurations for one or multiple pieces of traffic.

For example, the BS and/or UE may use at least one of a plurality of SPS and/or CG radio resources allocated by the plurality of SPS and/or CG configurations. The BS/UE may select the earliest radio resource for carrying a TB including user data of the BS/UE by considering a time at which the user data is generated.

As described above, when a plurality of radio resources given by a plurality of SPS and/or CG configurations are used to process one piece of traffic and mitigate the effect of jitter, the SPS and/or CG configurations may be grouped into one group. To indicate and/or inform that the SPS and/or CG configurations are grouped into one group, the BS may use a configuration group index, which is configured separately from the SPS and/or CG configurations. Specifically, configurations having the same configuration group index may be regarded as the same configuration group. The UE may assume that such SPS and/or CG configuration groups are associated with the same priority. In addition, the UE may expect that the SPS and/or CG configuration groups will always have the same periodicity. If one group is used for one piece of periodic traffic, each TO, which is configured by the SPS and/or CG in the group, may be used to mitigate jitter. If at least one TO within one time window is used for transmission, the UE may assume that other TOs are not used for the transmission.

It may be considered that a plurality of SPS and/or CG configurations are used for XR services having various types of traffic. For example, one XR service may require transmission of various types of traffic such as video, audio, and positioning information. Each piece of information for one XR service may have different requirements such as different traffic arrival rate, different throughput, different latency, different reliability, etc. To receive and/or transmit traffic with tight requirements first, the UE and/or BS may group a plurality of SPS and/or CG configurations that may be used for different traffic into a group and then prioritize each SPS and/or CG configuration within the group. If SPS and/or CG resources (particularly, CG PUSCHs) in the group overlap in the time domain, the UE may use a CG PUSCH having a higher priority in the group and drop other CG PUSCHs. According to this method, it is possible to semi-statically determine whether to use a CG PUSCH, thereby minimizing ambiguity between the UE and BS, reducing blind decoding of the BS, and facilitating PUSCH reception, unlike current NR where handling of overlapping UL grants is determined based on generation of a MAC protocol data unit (PDU).

A plurality of SPS and/or CG resources may be used for one piece of traffic, and one XR service may have various types of traffic. In this case, SPS and/or CG configurations that may be generated to process one piece of traffic may be set as one configuration group. A plurality of SPS and/or CG groups (configuration groups) that may be used for different types of traffic may be reconfigured into one large traffic group. Priorities within the corresponding traffic group may be configured for each configuration group. If a configuration group (particularly, CG PUSCH) within the traffic group overlaps with a CG PUSCH of another configuration group in the time domain, the UE may use a CG PUSCH of a configuration group having a higher priority within the traffic group and drop another CG PUSCH. According to this method, it is possible to semi-statically determine whether to use a CG PUSCH, thereby minimizing ambiguity between the UE and BS, reducing blind decoding of the BS, and facilitating PUSCH reception, unlike current NR where handling of overlapping UL grants is determined based on generation of a MAC PDU.

For each SPS and/or CG configuration in a configuration group or each SPS and/or CG group (configuration group) in a traffic group, priorities may be given through L1 signaling of the BS (e.g., activation DCI via PDCCH) or higher layer signaling (SPS-config or ConfiguredGrantConfig IE via RRC signaling).

As described above, it may be considered that a PDSCH/PUSCH of an SPS/CG configuration or SPS/CG group for which a priority is configured overlaps with a PDSCH/PUSCH of an SPS/CG configuration or SPS/CG group for which no priority configured. In this case, the UE may ignore the configured priority. Alternatively, the UE may prioritize the PDSCH/PUSCH for which the priority is configured over the PDSCH/PUSCH for which no priority is configured.

According to the present disclosure, the BS may configure a plurality of SPS/CG resources to the UE and then perform transmission by selecting radio resources depending on traffic arrival times, thereby securing a short time delay. The UE may be allocated a plurality of SPS/CG resources from the BS and receive information on valid resources and information on when to use the resources over a group-common PDCCH. Accordingly, the UE may perform PDSCH reception or PUSCH transmission with low power consumption on the plurality of SPS/CG resources.

The contents of the present disclosure are not limitedly applied only to UL and/or DL signal transmission and reception. For example, the contents of the present disclosure may also be used for direct communication between UEs. In this document, the term based station (BS) may be understood as a concept including a relay node as well as a BS. For example, the operations of a BS described in the present disclosure may be performed by a relay node as well as the BS.

It is obvious that each of the examples of the proposed methods may also be included as one implementation method of the present disclosure, and thus each example may be regarded as a kind of proposed method. Although the above-described proposed methods may be implemented independently, some of the proposed methods may be combined and implemented. In addition, it may be regulated that information on whether the proposed methods are applied (or information on rules related to the proposed methods) is transmitted from the BS to the UE in a predefined signal (e.g., physical layer signaling or higher layer signaling).

### Implementation examples

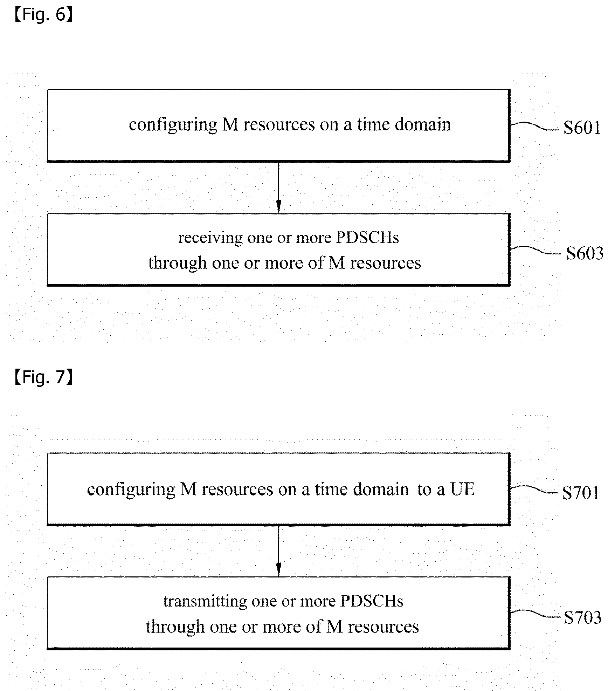

FIGS. 6 and 7 is a flowchart of a signal transmission and reception method according to embodiments of the present disclosure.

Referring to FIG. 6, an embodiment of the present disclosure may be performed by the UE. The embodiment may include: configuring M resources in the time domain (S601); and receiving one or more PDSCHs on one or more of the M resources (S603).

Referring to FIG. 7, another embodiment of the present disclosure may be performed by the BS. The embodiment may include: configuring M resources in the time domain to the UE (S701); and transmitting a PDSCH on one or more of the M resources (S703).

In addition to the operations of FIGS. 6 and/or 7, one or more of the operations described in Section 1 may be additionally performed.

Specifically, referring to Sections 1.1 to 1.5, the UE may be configured with a plurality of radio resources within one periodicity through a CG, SPS, and/or DCI. The plurality of radio resources within one periodicity may be M resources in the time domain.

Referring to Section 1.2-1, the UE may receive one or more PDSCHs on one or more of the M resources. To transmit the PDSCHs on the one or more of the M resources, the BS may transmit information on N resources available to the UE among the M resources in DCI. The UE may receive the DCI transmitted by the BS. Based on the received DCI, the UE may receive one or more DCIs on some of the N resources.

Referring to Section 1.2-1, the M resources may correspond to the plurality of resources included in the one periodicity, which may be configured based on an SPS configuration. Referring to Sections 1.3 and 1.4, the M resources may be a set consisting of some of radio resources and/or TOs configured by a plurality of SPS configurations.

The M resources may be configured by the SPS configuration, and the N resources may be configured by activation DCI. Alternatively, the M resources may be configured by the SPS configuration, and the N resources may be configured by the DCI other than the activation DCI. Further, the M resources may be configured by the activation DCI for the SPS configuration, and the N resources may be configured by the DCI other than the activation DCI.

The information on the N resources included in the DCI may be received in the form of a bitmap with a length of M. The information on the N resources included in the DCI may be received in the form of a single field where information on a first available resource among the M resources and information on the number of available resources are jointly coded.

Referring to Section 1.4, a TO set S consisting of the M resources may be configured based on a plurality of SPS configurations. For example, a resource set may be configured with some of resources configured by first and second SPS configurations. According to Option 1 of Section 1.4, when resources configured by the first SPS configuration and resources configured by the second SPS configuration overlap in the time domain, and when the first SPS configuration has a lower index than the second SPS configuration, the resources configured by the first SPS configuration may be included in the resource set, and the resources configured by the second SPS configuration may not be included in the resource set.

Referring to Section 1.2, the UE may determine the resources on which the one or more PDSCHs are to be received among the N resources based on a received DMRS.

Referring to Sections 1.1 to 1.4, the DCI may be a group-common DCI for reducing the burden of PDCCH signaling containing the information on the N resources.

In addition to the operations described with reference to FIGS. 6 and 7, the operations described with reference to FIGS. 1 to 5 and/or one or more of the operations described in Section 1 may be combined and further performed.

Example of communication system to which the present disclosure is applied

The various descriptions, functions, procedures, proposals, methods, and/or operation flowcharts of the present disclosure described herein may be applied to, but not limited to, various fields requiring wireless communication/connectivity (e.g., 5G) between devices.

More specific examples will be described below with reference to the drawings. In the following drawings/description, like reference numerals denote the same or corresponding hardware blocks, software blocks, or function blocks, unless otherwise specified.

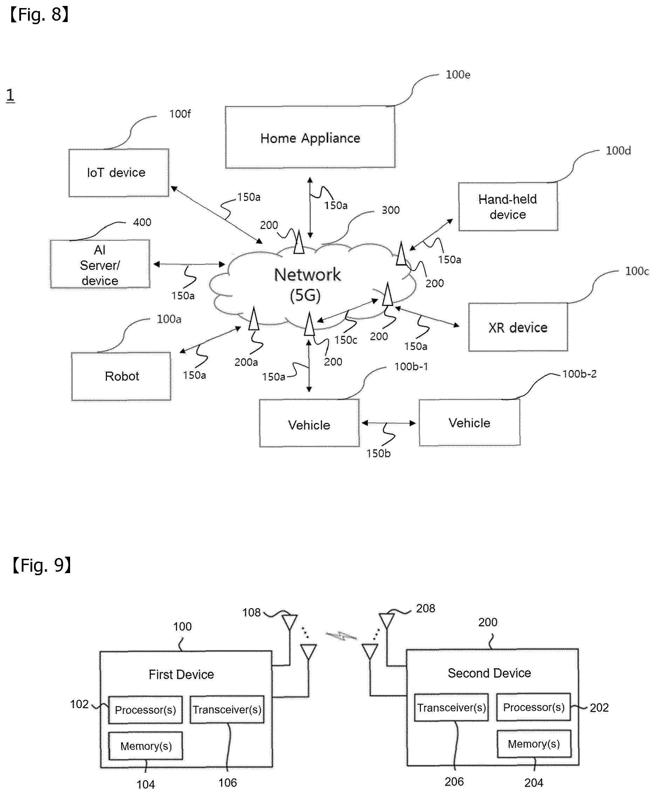

FIG. 8 illustrates a communication system 1 applied to the present disclosure.

Referring to FIG. 8, the communication system 1 applied to the present disclosure includes wireless devices, BSs, and a network. A wireless device is a device performing communication using radio access technology (RAT) (e.g., 5G NR (or New RAT) or LTE), also referred to as a communication/radio/5G device. The wireless devices may include, not limited to, a robot 100a, vehicles 100b-1 and 100b-2, an extended reality (XR) device 100c, a hand-held device 100d, a home appliance 100e, an IoT device 100f, and an artificial intelligence (AI) device/server 400. For example, the vehicles may include a vehicle having a wireless communication function, an autonomous driving vehicle, and a vehicle capable of vehicle-to-vehicle (V2V) communication. Herein, the vehicles may include an unmanned aerial vehicle (UAV) (e.g., a drone). The XR device may include an augmented reality (AR)/virtual reality (VR)/mixed reality (MR) device and may be implemented in the form of a head-mounted device (HMD), a head-up display (HUD) mounted in a vehicle, a television (TV), a smartphone, a computer, a wearable device, a home appliance, a digital signage, a vehicle, a robot, and so on. The hand-held device may include a smartphone, a smart pad, a wearable device (e.g., a smart watch or smart glasses), and a computer (e.g., a laptop). The home appliance may include a TV, a refrigerator, a washing machine, and so on. The IoT device may include a sensor, a smart meter, and so on. For example, the BSs and the network may be implemented as wireless devices, and a specific wireless device 200a may operate as a BS/network node for other wireless devices.

The wireless devices 100a to 100f may be connected to the network 300 via the BSs 200. An AI technology may be applied to the wireless devices 100a to 100f, and the wireless devices 100a to 100f may be connected to the AI server 400 via the network 300. The network 300 may be configured using a 3G network, a 4G (e.g., LTE) network, or a 5G (e.g., NR) network. Although the wireless devices 100a to 100f may communicate with each other through the BSs 200/network 300, the wireless devices 100a to 100f may perform direct communication (e.g., sidelink communication) with each other without intervention of the BSs/network. For example, the vehicles 100b-1 and 100b-2 may perform direct communication (e.g., V2V/vehicle-to-everything (V2X) communication). The IoT device (e.g., a sensor) may perform direct communication with other IoT devices (e.g., sensors) or other wireless devices 100a to 100f.

Wireless communication/connections 150a, 150b, and 150c may be established between the wireless devices 100a to 100f/BS 200 and between the BSs 200. Herein, the wireless communication/connections may be established through various RATs (e.g., 5G NR) such as UL/DL communication 150a, sidelink communication 150b (or, D2D communication), or inter-BS communication (e.g., relay or integrated access backhaul (IAB)). Wireless signals may be transmitted and received between the wireless devices, between the wireless devices and the BSs, and between the BSs through the wireless communication/connections 150a, 150b, and 150c. For example, signals may be transmitted and receive don various physical channels through the wireless communication/connections 150a, 150b and 150c. To this end, at least a part of various configuration information configuring processes, various signal processing processes (e.g., channel encoding/decoding, modulation/demodulation, and resource mapping/demapping), and resource allocation processes, for transmitting/receiving wireless signals, may be performed based on the various proposals of the present disclosure.

Example of wireless device to which the present disclosure is applied

FIG. 9 illustrates wireless devices applicable to the present disclosure.

Referring to FIG. 9, a first wireless device 100 and a second wireless device 200 may transmit wireless signals through a variety of RATs (e.g., LTE and NR). {The first wireless device 100 and the second wireless device 200} may correspond to {the wireless device 100x and the BS 200} and/or {the wireless device 100x and the wireless device 100x} of FIG. 8.

The first wireless device 100 may include one or more processors 102 and one or more memories 104, and further include one or more transceivers 106 and/or one or more antennas 108. The processor(s) 102 may control the memory(s) 104 and/or the transceiver(s) 106 and may be configured to implement the descriptions, functions, procedures, proposals, methods, and/or operation flowcharts disclosed in this document. For example, the processor(s) 102 may process information in the memory(s) 104 to generate first information/signals and then transmit wireless signals including the first information/signals through the transceiver(s) 106. The processor(s) 102 may receive wireless signals including second information/signals through the transceiver(s) 106 and then store information obtained by processing the second information/signals in the memory(s) 104. The memory(s) 104 may be connected to the processor(s) 102 and may store various pieces of information related to operations of the processor(s) 102. For example, the memory(s) 104 may store software code including instructions for performing all or a part of processes controlled by the processor(s) 102 or for performing the descriptions, functions, procedures, proposals, methods, and/or operation flowcharts disclosed in this document. The processor(s) 102 and the memory(s) 104 may be a part of a communication modem/circuit/chip designed to implement RAT (e.g., LTE or NR). The transceiver(s) 106 may be connected to the processor(s) 102 and transmit and/or receive wireless signals through the one or more antennas 108. Each of the transceiver(s) 106 may include a transmitter and/or a receiver. The transceiver(s) 106 may be interchangeably used with radio frequency (RF) unit(s). In the present disclosure, the wireless device may be a communication modem/circuit/chip.

The second wireless device 200 may include one or more processors 202 and one or more memories 204, and further include one or more transceivers 206 and/or one or more antennas 208. The processor(s) 202 may control the memory(s) 204 and/or the transceiver(s) 206 and may be configured to implement the descriptions, functions, procedures, proposals, methods, and/or operation flowcharts disclosed in this document. For example, the processor(s) 202 may process information in the memory(s) 204 to generate third information/signals and then transmit wireless signals including the third information/signals through the transceiver(s) 206. The processor(s) 202 may receive wireless signals including fourth information/signals through the transceiver(s) 106 and then store information obtained by processing the fourth information/signals in the memory(s) 204. The memory(s) 204 may be connected to the processor(s) 202 and store various pieces of information related to operations of the processor(s) 202. For example, the memory(s) 204 may store software code including instructions for performing all or a part of processes controlled by the processor(s) 202 or for performing the descriptions, functions, procedures, proposals, methods, and/or operation flowcharts disclosed in this document. The processor(s) 202 and the memory(s) 204 may be a part of a communication modem/circuit/chip designed to implement RAT (e.g., LTE or NR). The transceiver(s) 206 may be connected to the processor(s) 202 and transmit and/or receive wireless signals through the one or more antennas 208. Each of the transceiver(s) 206 may include a transmitter and/or a receiver. The transceiver(s) 206 may be interchangeably used with RF unit(s). In the present disclosure, the wireless device may be a communication modem/circuit/chip.

Now, hardware elements of the wireless devices 100 and 200 will be described in greater detail. One or more protocol layers may be implemented by, not limited to, one or more processors 102 and 202. For example, the one or more processors 102 and 202 may implement one or more layers (e.g., functional layers such as physical (PHY), medium access control (MAC), radio link control (RLC), packet data convergence protocol (PDCP), RRC, and service data adaptation protocol (SDAP)). The one or more processors 102 and 202 may generate one or more protocol data units (PDUs) and/or one or more service data Units (SDUs) according to the descriptions, functions, procedures, proposals, methods, and/or operation flowcharts disclosed in this document. The one or more processors 102 and 202 may generate messages, control information, data, or information according to the descriptions, functions, procedures, proposals, methods, and/or operation flowcharts disclosed in this document and provide the messages, control information, data, or information to one or more transceivers 106 and 206. The one or more processors 102 and 202 may generate signals (e.g., baseband signals) including PDUs, SDUs, messages, control information, data, or information according to the descriptions, functions, procedures, proposals, methods, and/or operation flowcharts disclosed in this document and provide the generated signals to the one or more transceivers 106 and 206. The one or more processors 102 and 202 may receive the signals (e.g., baseband signals) from the one or more transceivers 106 and 206 and acquire the PDUs, SDUs, messages, control information, data, or information according to the descriptions, functions, procedures, proposals, methods, and/or operation flowcharts disclosed in this document.

The one or more processors 102 and 202 may be referred to as controllers, microcontrollers, microprocessors, or microcomputers. The one or more processors 102 and 202 may be implemented by hardware, firmware, software, or a combination thereof. For example, one or more application specific integrated circuits (ASICs), one or more digital signal processors (DSPs), one or more digital signal processing devices (DSPDs), one or more programmable logic devices (PLDs), or one or more field programmable gate arrays (FPGAs) may be included in the one or more processors 102 and 202. The descriptions, functions, procedures, proposals, methods, and/or operation flowcharts disclosed in this document may be implemented using firmware or software, and the firmware or software may be configured to include the modules, procedures, or functions. Firmware or software configured to perform the descriptions, functions, procedures, proposals, methods, and/or operation flowcharts disclosed in this document may be included in the one or more processors 102 and 202 or may be stored in the one or more memories 104 and 204 and executed by the one or more processors 102 and 202. The descriptions, functions, procedures, proposals, methods, and/or operation flowcharts disclosed in this document may be implemented using firmware or software in the form of code, an instruction, and/or a set of instructions.

The one or more memories 104 and 204 may be connected to the one or more processors 102 and 202 and store various types of data, signals, messages, information, programs, code, instructions, and/or commands. The one or more memories 104 and 204 may be configured to include read-only memories (ROMs), random access memories (RAMs), electrically erasable programmable read-only memories (EPROMs), flash memories, hard drives, registers, cash memories, computer-readable storage media, and/or combinations thereof. The one or more memories 104 and 204 may be located at the interior and/or exterior of the one or more processors 102 and 202. The one or more memories 104 and 204 may be connected to the one or more processors 102 and 202 through various technologies such as wired or wireless connection.

The one or more transceivers 106 and 206 may transmit user data, control information, and/or wireless signals/channels, mentioned in the methods and/or operation flowcharts of this document, to one or more other devices. The one or more transceivers 106 and 206 may receive user data, control information, and/or wireless signals/channels, mentioned in the descriptions, functions, procedures, proposals, methods, and/or operation flowcharts disclosed in this document, from one or more other devices. For example, the one or more transceivers 106 and 206 may be connected to the one or more processors 102 and 202 and transmit and receive wireless signals. For example, the one or more processors 102 and 202 may perform control so that the one or more transceivers 106 and 206 may transmit user data, control information, or wireless signals to one or more other devices. The one or more processors 102 and 202 may perform control so that the one or more transceivers 106 and 206 may receive user data, control information, or wireless signals from one or more other devices. The one or more transceivers 106 and 206 may be connected to the one or more antennas 108 and 208 and the one or more transceivers 106 and 206 may be configured to transmit and receive user data, control information, and/or wireless signals/channels, mentioned in the descriptions, functions, procedures, proposals, methods, and/or operation flowcharts disclosed in this document, through the one or more antennas 108 and 208. In this document, the one or more antennas may be a plurality of physical antennas or a plurality of logical antennas (e.g., antenna ports). The one or more transceivers 106 and 206 may convert received wireless signals/channels from RF band signals into baseband signals in order to process received user data, control information, and wireless signals/channels using the one or more processors 102 and 202. The one or more transceivers 106 and 206 may convert the user data, control information, and wireless signals/channels processed using the one or more processors 102 and 202 from the baseband signals into the RF band signals. To this end, the one or more transceivers 106 and 206 may include (analog) oscillators and/or filters.

Example of use of wireless device to which the present disclosure is applied

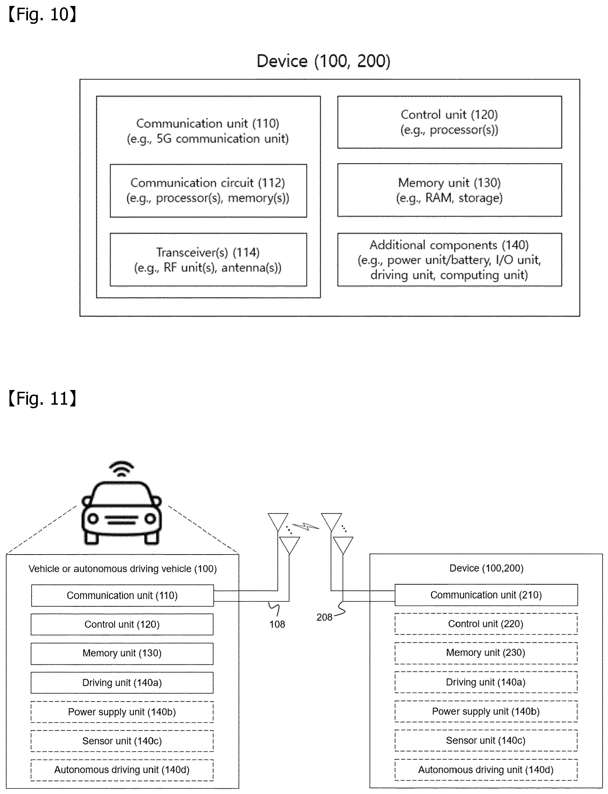

FIG. 10 illustrates another example of a wireless device applied to the present disclosure. The wireless device may be implemented in various forms according to a use case/service (refer to FIG. 8).

Referring to FIG. 10, wireless devices 100 and 200 may correspond to the wireless devices 100 and 200 of FIG. 9 and may be configured to include various elements, components, units/portions, and/or modules. For example, each of the wireless devices 100 and 200 may include a communication unit 110, a control unit 120, a memory unit 130, and additional components 140. The communication unit 110 may include a communication circuit 112 and transceiver(s) 114. For example, the communication circuit 112 may include the one or more processors 102 and 202 and/or the one or more memories 104 and 204 of FIG. 9. For example, the transceiver(s) 114 may include the one or more transceivers 106 and 206 and/or the one or more antennas 108 and 208 of FIG. 9. The control unit 120 is electrically connected to the communication unit 110, the memory 130, and the additional components 140 and provides overall control to the wireless device. For example, the control unit 120 may control an electric/mechanical operation of the wireless device based on programs/code/instructions/information stored in the memory unit 130. The control unit 120 may transmit the information stored in the memory unit 130 to the outside (e.g., other communication devices) via the communication unit 110 through a wireless/wired interface or store, in the memory unit 130, information received through the wireless/wired interface from the outside (e.g., other communication devices) via the communication unit 110.

The additional components 140 may be configured in various manners according to type of the wireless device. For example, the additional components 140 may include at least one of a power unit/battery, input/output (I/O) unit, a driving unit, and a computing unit. The wireless device may be implemented in the form of, not limited to, the robot (100a of FIG. 8), the vehicles (100b-1 and 100b-2 of FIG. 8), the XR device (100c of FIG. 8), the hand-held device (100d of FIG. 8), the home appliance (100e of FIG. 8), the IoT device (100f of FIG. 8), a digital broadcasting terminal, a hologram device, a public safety device, an MTC device, a medical device, a FinTech device (or a finance device), a security device, a climate/environment device, the AI server/device (400 of FIG. 8), the BSs (200 of FIG. 8), a network node, or the like. The wireless device may be mobile or fixed according to a use case/service.

In FIG. 10, all of the various elements, components, units/portions, and/or modules in the wireless devices 100 and 200 may be connected to each other through a wired interface or at least a part thereof may be wirelessly connected through the communication unit 110. For example, in each of the wireless devices 100 and 200, the control unit 120 and the communication unit 110 may be connected by wire and the control unit 120 and first units (e.g., 130 and 140) may be wirelessly connected through the communication unit 110. Each element, component, unit/portion, and/or module in the wireless devices 100 and 200 may further include one or more elements. For example, the control unit 120 may be configured with a set of one or more processors. For example, the control unit 120 may be configured with a set of a communication control processor, an application processor, an electronic control unit (ECU), a graphical processing unit, and a memory control processor. In another example, the memory 130 may be configured with a RAM, a dynamic RAM (DRAM), a ROM, a flash memory, a volatile memory, a non-volatile memory, and/or a combination thereof.

Example of vehicle or autonomous driving vehicle to which the present disclosure is applied

FIG. 11 illustrates a vehicle or an autonomous driving vehicle applied to the present disclosure. The vehicle or autonomous driving vehicle may be implemented as a mobile robot, a car, a train, a manned/unmanned aerial vehicle (AV), a ship, or the like.

Referring to FIG. 11, a vehicle or autonomous driving vehicle 100 may include an antenna unit 108, a communication unit 110, a control unit 120, a driving unit 140a, a power supply unit 140b, a sensor unit 140c, and an autonomous driving unit 140d. The antenna unit 108 may be configured as a part of the communication unit 110. The blocks 110/130/140a to 140d correspond to the blocks 110/130/140 of FIG. 10, respectively.

The communication unit 110 may transmit and receive signals (e.g., data and control signals) to and from external devices such as other vehicles, BSs (e.g., gNBs and road side units), and servers. The control unit 120 may perform various operations by controlling elements of the vehicle or the autonomous driving vehicle 100. The control unit 120 may include an ECU. The driving unit 140a may enable the vehicle or the autonomous driving vehicle 100 to drive on a road. The driving unit 140a may include an engine, a motor, a powertrain, a wheel, a brake, a steering device, and so on. The power supply unit 140b may supply power to the vehicle or the autonomous driving vehicle 100 and include a wired/wireless charging circuit, a battery, and so on. The sensor unit 140c may acquire information about a vehicle state, ambient environment information, user information, and so on. The sensor unit 140c may include an inertial measurement unit (IMU) sensor, a collision sensor, a wheel sensor, a speed sensor, a slope sensor, a weight sensor, a heading sensor, a position module, a vehicle forward/backward sensor, a battery sensor, a fuel sensor, a tire sensor, a steering sensor, a temperature sensor, a humidity sensor, an ultrasonic sensor, an illumination sensor, a pedal position sensor, and so on. The autonomous driving unit 140d may implement technology for maintaining a lane on which the vehicle is driving, technology for automatically adjusting speed, such as adaptive cruise control, technology for autonomously driving along a determined path, technology for driving by automatically setting a route if a destination is set, and the like.

For example, the communication unit 110 may receive map data, traffic information data, and so on from an external server. The autonomous driving unit 140d may generate an autonomous driving route and a driving plan from the obtained data. The control unit 120 may control the driving unit 140a such that the vehicle or autonomous driving vehicle 100 may move along the autonomous driving route according to the driving plan (e.g., speed/direction control). During autonomous driving, the communication unit 110 may aperiodically/periodically acquire recent traffic information data from the external server and acquire surrounding traffic information data from neighboring vehicles. During autonomous driving, the sensor unit 140c may obtain information about a vehicle state and/or surrounding environment information. The autonomous driving unit 140d may update the autonomous driving route and the driving plan based on the newly obtained data/information. The communication unit 110 may transfer information about a vehicle position, the autonomous driving route, and/or the driving plan to the external server. The external server may predict traffic information data using AI technology based on the information collected from vehicles or autonomous driving vehicles and provide the predicted traffic information data to the vehicles or the autonomous driving vehicles.

Those skilled in the art will appreciate that the present disclosure may be carried out in other specific ways than those set forth herein without departing from the spirit and essential characteristics of the present disclosure. The above embodiments are therefore to be construed in all aspects as illustrative and not restrictive. The scope of the disclosure should be determined by the appended claims and their legal equivalents, not by the above description, and all changes coming within the meaning and equivalency range of the appended claims are intended to be embraced therein.

As described above, the present disclosure is applicable to various wireless communication systems.

As is apparent from the above description, the present disclosure has effects as follows.

According to one embodiment of the present disclosure, when control and data signals are transmitted and received between communication devices, the signals may be transmitted and received more efficiently based on operations different from those in the prior art.

It will be apparent to those skilled in the art that various modifications and variations can be made in the present disclosure without departing from the spirit and scope of the disclosure. Thus, it is intended that the present disclosure cover the modifications and variations of this disclosure provided they come within the scope of the appended claims and their equivalents.

## Claims

1. A method of transmitting and receiving a signal by a user equipment (UE) in a wireless communication system, the method comprising:
configuring M resources in a time domain; and
receiving one or more physical downlink shared channels (PDSCHs) on one or more of the M resources,
wherein the M resources are a plurality of resources within one periodicity of a semi-persistent scheduling (SPS) configuration,
wherein information on N resources available to the UE among the M resources is received in downlink control information (DCI), and
wherein the one or more PDSCHs are received on some of the N resources.

2. The method of claim 1, wherein the DCI is activation DCI for the SPS configuration.

3. The method of claim 1 or 2, wherein the information on the N resources is received in the form of a bitmap having a length of M.

4. The method of any one of claims 1 to 3, wherein the information on the N resources is received in the form of a single field in which information on a first available resource among the M resources and a number of available resources are jointly coded.

5. The method of claim 4, wherein DCI including the single field is different from activation DCI for the SPS configuration.

6. The method of claim 4 or 5, wherein DCI including the single field is received before a start of a specific periodicity of the SPS configuration to change positions of the N resources on the M resources.

7. The method of any one of claims 1 to 6, wherein among the N resources, the resources on which the one or more PDSCHs are received are determined based on a received demodulation reference signal (DMRS).

8. The method of any one of claims 1 to 7, wherein one hybrid automatic repeat request acknowledgement (HARQ-ACK) is transmitted in response to the one or more PDSCHs.

9. The method of any one of claims 1 to 8, wherein the M resources are included in a resource set consisting of some of resources configured by a first SPS configuration and a second configuration, and
wherein based on resources configured by the first SPS configuration being overlapped with resources configured by the second SPS configuration in the time domain, and the first SPS configuration having a lower index than the second SPS configuration, the resources configured by the first SPS configuration are included in the resource set, and the resources configured by the second SPS configuration are not included in the resource set.

10. A user equipment (UE) configured to transmit and receive a signal in a wireless communication system, the UE comprising:
at least one transceiver;
at least one processor; and
at least one memory operably connected to the at least one processor and configured to store instructions that, when executed, cause the at least one processor to perform operations comprising:
configuring M resources in a time domain; and
receiving one or more physical downlink shared channels (PDSCHs) on one or more of the M resources,
wherein the M resources are a plurality of resources within one periodicity of a semi-persistent scheduling (SPS) configuration,
wherein information on N resources available to the UE among the M resources is received in downlink control information (DCI), and
wherein the one or more PDSCHs are received on some of the N resources.

11. A computer-readable non-volatile storage medium comprising at least one computer program configured to cause at least one processor to perform operations comprising:
configuring M resources in a time domain; and
receiving one or more physical downlink shared channels (PDSCHs) on one or more of the M resources,
wherein the M resources are a plurality of resources within one periodicity of a semi-persistent scheduling (SPS) configuration,
wherein information on N resources available to the UE among the M resources is received in downlink control information (DCI), and
wherein the one or more PDSCHs are received on some of the N resources.

12. A method of transmitting and receiving a signal by a base station in a wireless communication system, the method comprising:
configuring M resources in a time domain for a user equipment (UE); and
transmitting one or more physical downlink shared channels (PDSCHs) on one or more of the M resources,
wherein the M resources are a plurality of resources within one periodicity of a semi-persistent scheduling (SPS) configuration,
wherein information on N resources available to the UE among the M resources is transmitted in downlink control information (DCI), and
wherein the one or more PDSCHs are transmitted on some of the N resources.

13. A base station configured to transmit a signal in a wireless communication system, the BS comprising:
at least one transceiver;
at least one processor; and
at least one memory operably connected to the at least one processor and configured to store instructions that, when executed, cause the at least one processor to perform operations comprising:
configuring M resources in a time domain for a user equipment (UE); and
transmitting one or more physical downlink shared channels (PDSCHs) on one or more of the M resources,
wherein the M resources are a plurality of resources within one periodicity of a semi-persistent scheduling (SPS) configuration,
wherein information on N resources available to the UE among the M resources is transmitted in downlink control information (DCI), and
wherein the one or more PDSCHs are transmitted on some of the N resources.
